# EUROPEAN PATENT APPLICATION

(11) **EP 2 410 806 A1**
(43) Date of publication of application: **25.01.2012**
(21) Application number: 10753109.7
(22) Date of filing: 15.03.2010
(51) Int. Cl.: H04W 72/08

(54) **METHOD AND APPARATUS FOR PREVENTING SIGNAL INTERFERENCE IN WIRELESS RELAY NETWORK BASED ON SYNC HYBRID AUTOMATIC REPEAT REQUEST (HARQ)**

(30) Priority: 16.03.2009 CN 200910047716
(71) Applicant: Alcatel Lucent, 75008 Paris (FR)
(72) Inventor: YANG, Tao, Shanghai 201206 (CN); FANIUOLO, Antonella, Oxfordshire SN7 7YQ (GB)
(74) Representative: 2SPL Patentanwälte
(86) International application number: PCT/CN2010/071042
(87) International publication number: WO 2010/105542

(57) **Abstract**

A method and apparatus for preventing interference in a relay device (1) and a mobile terminal (2) of a wireless relay network based on synchronous HARQ are provided. Wherein, the mobile terminal judges whether an uplink HARQ process will interfere with communication between the relay device and a base station (0) in a sub-frame, and if yes, the mobile terminal will suspend sending uplink signal for the uplink HARQ process in the sub-frame.

## Description

### Field of the Invention

The present invention relates to preventing signal interference, more particularly, to method and apparatus for preventing signal in a wireless relay network based on synchronous HARQ.

### Background of the Invention

In 3GPP LTE-Advanced standards (referred to as LTEA hereinafter), relay devices are recently introduced to improve system overall performance, such as increasing throughputs, enlarging network coverage and the like. Wherein, it has been proposed by many companies that a relay device cannot send and receive signals simultaneously in one frequency band so as to avoid the relay device interfering with itself. Hereinafter, the interference caused by using the same time-frequency resource to receive and send signals at the relay device is called self-interference, and those skilled in the art understands that the self-interference defined here is different from the self-interference in a CDMA system.

Since downlink relay link and downlink access link share downlink frequency resources and uplink relay link and uplink access link share uplink frequency resources, in order to avoid the self-interference at a relay device, the following preconditions should be satisfied:
1. when a base station sends downlink signal to a relay device, the relay device should not send downlink signal to a mobile terminal in the same sub-frame;
2. when a relay device sends uplink signal to a base station, a mobile terminal should not send uplink signal to the relay device in the same uplink sub-frame.

A HARQ process is divided into two processes, namely uplink HARQ process and downlink HARQ process. In the uplink HARQ process, a mobile terminal sends data to a relay device and the relay device thus sends back ACK or NACK to the mobile terminal; reversely, in the downlink HARQ process, a relay device sends data to a mobile terminal and the mobile terminal thus sends back ACK or NACK to the relay device.

In LTEA, the uplink HARQ is based on synchronous HARQ technique. That is, there is a fixed time interval between an initial transmission and a HARQ feedback namely ACK or NACK in an uplink process, and between the ACK or NACK and a subsequent retransmission or a new initial transmission.

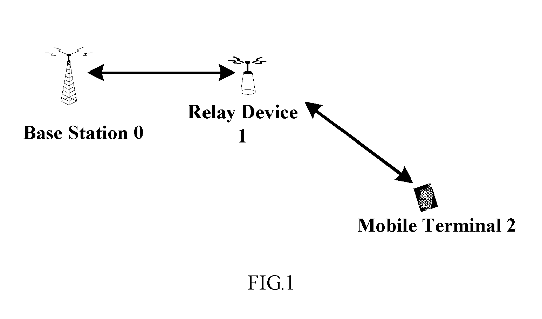

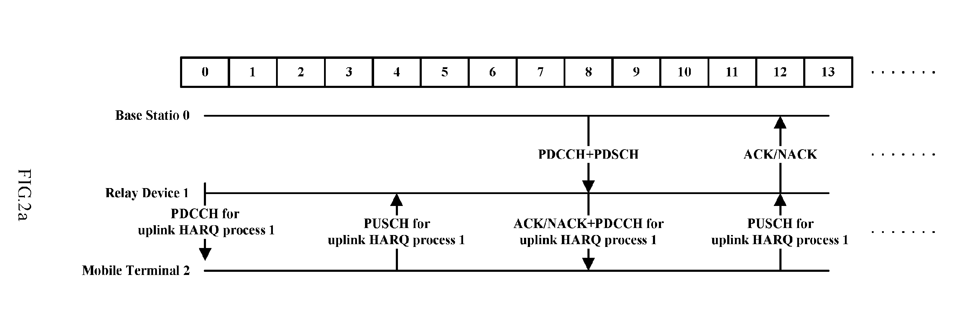

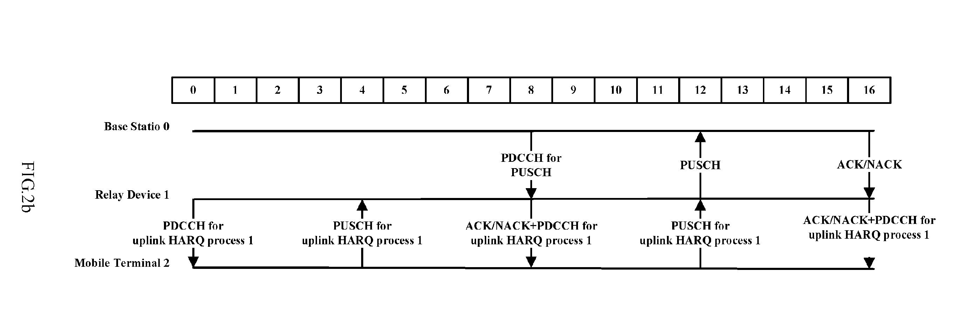

The wireless relay network shown in Fig.1 comprises a base station (eNB) 0, a relay device (RN) 1 and a mobile terminal (MS) 2. Figs.2a-2b shows signal flow causing the self-interference at the relay device. Referring to Fig.2a or 2b in combination with Fig.1, it can be clearly seen that there is a fixed time interval between adjacent uplink or downlink signals with the same HARQ process identifier. Assume that the duration of a sub-frame is 1 millisecond (ms), PDCCH of uplink HARQ process 1 and PUSCH of uplink HARQ process 1 is at an interval of 4 ms, the interval between HARQ feedback (ACK/NACK and/or PDCCH) and PUSCH of uplink HARQ process 1 is also 4 ms, and so on. Wherein, 0-13 represents 14 sub-frames. Referring to Fig.2a, in sub-frame 0, relay device 1 sends control information to mobile terminal 2 on PDCCH (Physical Downlink Control Channel) to instruct mobile terminal 2 to send uplink signal in uplink HARQ process 1.

Just because the uplink HARQ process between the relay device and the mobile terminal is based on synchronous HARQ technique, it is difficult to well satisfy the aforementioned two preconditions. In Figs 2a and 2b, uplink HARQ process 1 causes self-interference at relay device 1 in sub-frame 8, 12 and sub-frame 8, 12, 16, respectively.

Unfortunately, because relay devices are just introduced to the standards like LTEA, the resulting interference has not been considered and there is no corresponding solution for it.

### Summary of the Invention

In order to solve the technology problems described in the above, it is provided in the present invention that a mobile terminal judges whether its uplink HARQ process will interfere with a communication between a relay device and a base station in a sub-frame, and if yes, the mobile terminal will suspend sending the uplink signal in the uplink HARQ process in the sub-frame. Preferably, the mobile terminal will suspend sending all subsequent uplink signals in the uplink HARQ process.

Accordingly, it is further provided in the present invention that a relay device judges whether a downlink signal to be sent for a certain uplink HARQ process of a mobile terminal by itself will cause interference at the transceiver of the relay device, namely whether the downlink signal sent by itself will form spatial superposition at its antennas so as to impact the reception of downlink signals from a base station. If the judging result is that the above interference will happen, the relay device stops sending downlink signal in the uplink HARQ process in the sub-frame, such as ACK or NACK. Preferably, the relay device stops sending all subsequent downlink signals in the uplink HARQ process.

Preferably, after suspending sending signals in an uplink HARQ process, a condition for triggering resuming is required. According to a detailed embodiment of the present invention, it is judged by the relay device whether a high-priority communication causing the suspending has ended or not, and if yes, it resumes sending downlink signal therein by itself and instructs the mobile terminal to resume sending uplink signal.

Optionally, the downlink signal that the relay device resumes sending is used to instruct the mobile terminal to resume sending uplink signal.

According to an aspect of the present invention, a method of preventing signal interference in a first device of a wireless relay network based on synchronous HARQ is provided. Wherein, the method comprises the following steps: obtaining resource allocation information, which indicates radio resources allocated to said first device and a relay device to which it belongs; and judging whether an uplink signal to be sent by said first device in a sub-frame for an uplink HARQ process of said first device will interfere with a high-priority communication of said relay device; suspending sending uplink signal for said uplink HARQ process in said sub-frame, if the uplink signal to be sent by said first device in said sub-frame for said uplink HARQ process will interfere with said high-priority communication of said relay device.

Wherein, the first device can be a mobile terminal, and can also be a relay device.

According to another aspect of the present invention, a method of preventing signal interference in a relay device of a wireless relay network based on synchronous HARQ is provided. The method comprises the following steps: obtaining resource allocation information, which indicates radio resources allocated to said relay device and a first device served by said relay device; and judging, according to said resource allocation information, whether an downlink signal to be sent by said relay device in a sub-frame for an uplink HARQ process of said first device will interfere with a high-priority communication of said relay device; suspending sending downlink signal for said uplink HARQ process in said sub-frame, if the downlink signal to be sent by said relay device in said sub-frame for an uplink HARQ process of said first device will interfere with said high-priority communication of said relay device.

Wherein, the first device can be a mobile terminal, and can also be a relay device.

According to another aspect of the present invention, a first interference preventing apparatus for preventing signal interference in a first device of a wireless relay network based on synchronous HARQ is provided. The first interference preventing apparatus comprises: a first obtaining means for obtaining resource allocation information, which indicates radio resources allocated to said first device and a relay device to which it belongs; and a first judging means for judging whether an uplink signal to be sent by said first device in a sub-frame for an uplink HARQ process of said first device will interfere with a high-priority communication of said relay device; a first suspending means for making said first device suspend sending uplink signal in said sub-frame for said uplink HARQ process, if the uplink signal to be sent by said first device in said sub-frame for said uplink HARQ process will interfere with said high-priority communication of said relay device.

Wherein, the first device can be a mobile terminal, and can also be a relay device.

According to another aspect of the present invention, a second interference preventing apparatus for preventing signal interference in a relay device of a wireless relay network based on synchronous HARQ is provided. The second interference preventing apparatus comprises: a second obtaining means for obtaining resource allocation information, which indicates radio resources allocated to said relay device and a first device served by said relay device; and a third judging means for judging according to said resource allocation information whether a downlink signal to be sent by said relay device in a sub-frame for an uplink HARQ process of said first device will interfere with a high-priority communication of said relay device; a second suspending means for, if the downlink signal to be sent by said relay device in said sub-frame for an uplink HARQ process of said first device will interfere with a high-priority communication of said relay device, then making said relay device suspend sending downlink signal for said uplink HARQ process in said sub-frame.

Wherein, the first device can be a mobile terminal, and can also be a relay device.

With the methods and apparatuses provided by the present invention, it can effectively avoid the self-interference at the relay device caused by the uplink HARQ process of the mobile terminal. Moreover, in the present invention, no modification to the physical layer at network devices is required, and thus, the cost for backward compatibility is relatively low. Furthermore, the present invention is advantages in increasing resource utilization and system performance.

### Brief Description of Drawings

Other objectives, features and advantages of the present invention will become more apparent from the following detailed description of the non-limiting embodiments in connection with the accompanying drawings. Wherein, same or similar reference signs refer to same or similar apparatus or step features.
Fig.1 shows a typical wireless relay network;
Figs.2a-2b show signal flow causing self-interference at a relay device in LTEA;
Fig.3 shows a flowchart of a system method according to a detailed embodiment of the present invention;
Figs.4a, 4b show signal flow diagram of a wireless relay network after using interference preventing method and apparatus of the present invention
Fig.5 shows a block diagram of a first interference preventing apparatus for preventing signal interference in a first device of a wireless relay network based on synchronous HARQ according to a detailed embodiment of the present invention;
Fig.6 is a block diagram of a second interference preventing apparatus for preventing signal interference in a relay device of a wireless relay network based on synchronous HARQ according to a detailed embodiment of the present invention.

### Detailed Description of Embodiments

Detailed description of the non-limiting embodiments is given below in connection with the accompanying drawings.

It is easy to understand that, in Figs.2a-2b and the subsequent signal flow diagrams, only one uplink HARQ process between relay device 1 and mobile terminal 2 is illustrated, but those skilled in the art understands that there can simultaneously be other HARQ processes between mobile terminal 2 and relay device 1. For example, a downlink HARQ process can occupy sub-frames 1, 5, 9... shown in Fig.2. Since in a frequency division system such as LTEA, there is a sufficient guard interval between uplink frequency band and downlink frequency band, a sub-frame can be used for an uplink HARQ process and a downlink HARQ process simultaneously without causing any self-interference at the relay device. In view of this, the following discussion focuses on uplink synchronous HARQ process based on synchronous HARQ technique.

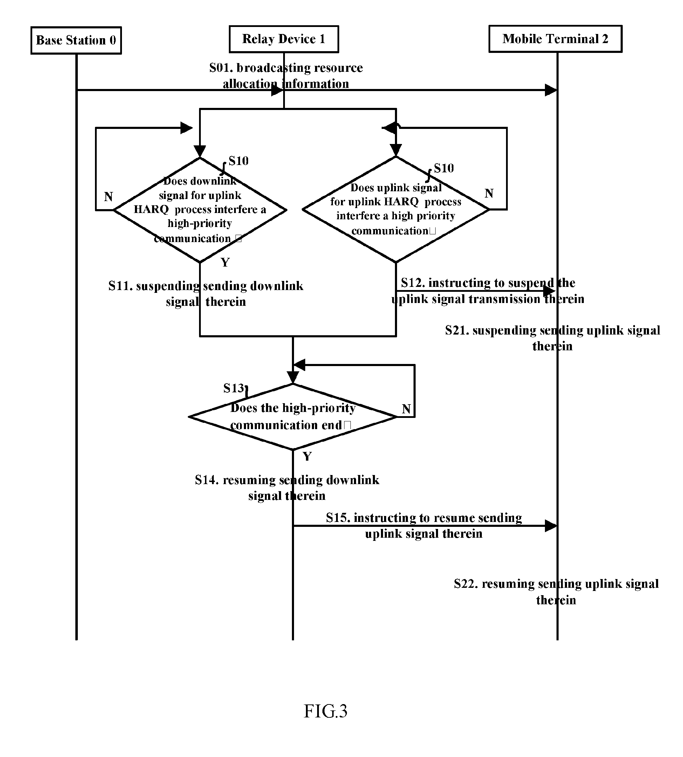

Fig.3 shows a flowchart of a system method according to a detailed embodiment of the present invention. The detailed description of the method is given below with reference to Fig.3 and in combination with Fig.1 and each signal flow diagram.

Wherein, in step S01, base station 0 broadcasts resource allocation information to each relay device and mobile terminals served by it, wherein when a certain mobile terminal cannot directly obtain resource allocation information from base station 0, the relay device to which it belongs forwards resource allocation information to the mobile terminal. In the following, it is not discussed in classification how mobile terminals obtain resource allocation.

The above-mentioned resource allocation information mainly indicates sub-frames allocated by base station 0. According to the resource allocation information, relay device 1 knows which of sub-frames can be used to receive uplink signal sent from mobile terminal 2 and which of sub-frames can be used to send downlink signals to mobile terminal 2. If necessary, the resource allocation information also indicates the corresponding frequency resources of each sub-frame.

According to the above-mentioned resource allocation information, mobile terminal 2 knows which of sub-frames can be used to send uplink signal to relay device 1 and which of sub-frames can be used to receive downlink signal sent from relay device 1.

Based on the present invention, the system reserves sub-frames for high-priority communication between base station 0 and relay device 1. These reserved sub-frames can either be statically configured at base station 0, relay device 1 and mobile terminal 2, or be dynamically determined by base station 0 and relay device 1 and mobile terminal 2 are informed thereof by base station 0. Wherein, when using the way of informing after being dynamically determined, preferably, the resource allocation information broadcasted by base station 0 in step S01 further points out each sub-frame reserved for the communication between base station 0 and relay device 1 besides sub-frames used for communication between relay device 1 and mobile terminal 2. In each embodiment described in below, such reserved sub-frames are called reserved sub-frame, and in any embodiment, the resource allocation information points out each reserved sub-frame.

The resource allocation information of which base station 0 informs in step S01 enables relay device 1 to directly judge whether a downlink signal sent by relay 1 in a sub-frame for an uplink HARQ process (taking uplink HARQ process 1 in each signal flow diagram as an example hereinafter) of mobile terminal 2 will interfere with a high-priority communication between it and base station 0, as step S10 in Fig.3.

Wherein, from the view of a mobile terminal like mobile terminal 2, communication between base station 0 and relay device 1 normally have higher priority, and therefore, communication having higher priority such as communication between base station 0 and relay device 1 is called high-priority communication.

Those skilled in the art understand that high priority communication is not limited to communication between base station and relay device. For another example, in a wireless network comprising multi-level relay devices, a low-level relay device is in a similar rank as mobile terminal 2 in Fig.1. The so-called low-level relay device is farther away from base station than a relay device with its next higher level, and is indirectly connected to base station via the relay device with the next higher level. In this case, similar to mobile terminal 2, an uplink HARQ process between this low-level relay device and the relay device with the next higher level is required to be constrained because it may interfere with high-priority communication between the relay device with the next higher level and base station (or a relay device with an even higher level). Considering that there is no substantial difference between the low-level relay device and mobile terminal 2 in the discussion in the present invention, both are referred to as a first device, and without loss of generality, mobile terminal 2 in Fig.1 is taken as an example.

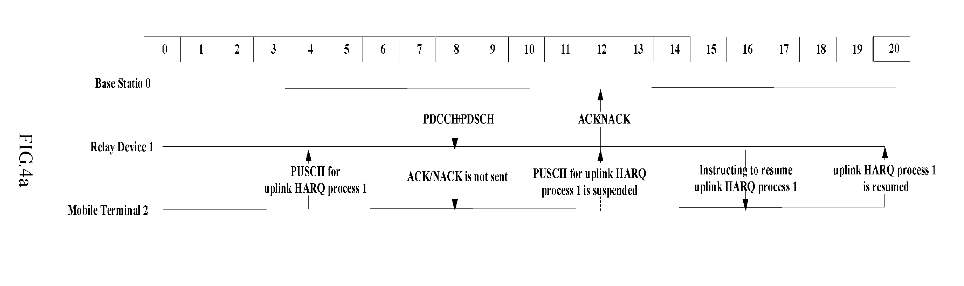

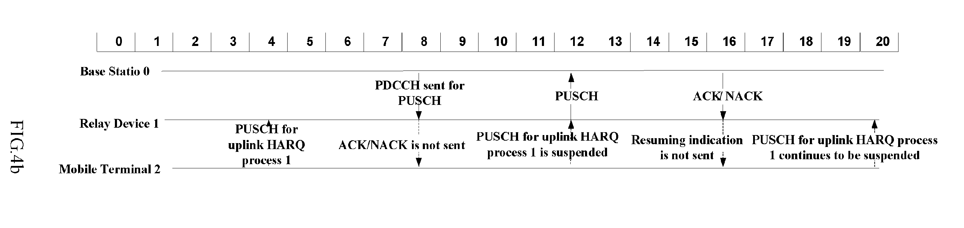

After the resource allocation information is obtained, the subsequent operation procedure of relay device 1 and mobile terminal 2 is now discussed with reference to Fig.3 and in combination of Figs.4a, 4b, wherein Figs.4a, 4b is signal flow diagram of a wireless relay network after using interference preventing method and apparatus of the present invention.

In step S10, relay device 1 judges, according the obtained resource allocation information, whether a downlink signal sent in a sub-frame for uplink process 1 of mobile terminal 2 will interfere with high-priority communication between it and base station 0.

Wherein, in an embodiment of the present invention, multicast broadcast single frequency network (MBSFN) sub-frames defined in LTEA are used as reserved sub-frames.

Although the sub-frames are all continuously numbered in each accompanying drawings of the present invention, those skilled in the art understand that these sub-frames can belong to different frames. In an embodiment where the frame duration is 10 ms, sub-frame 8 in any one of signal flow diagram is sub-frame 8 in frame i, and sub-frame 18 is sub-frame 8 in frame i+1.

Suppose that the sub-frames covered by the resource allocation information broadcasted in step S01 in Fig.3 starts from sub-frame 0 in Fig.4a. Then, in step S10, it is preferably to perform judging starting from sub-frame 8, because sub-frames 0-7 are not reserved from high-priority communication between base station 0 and relay device 1, thereby not resulting in interference problem.

In particular, the judging procedure in step S10 is as follows: for sub-frame 8, relay device 1 considers which kind of transmission is to be performed; if in sub-frame 8, base station 0 will send a downlink signal to relay device 1 and relay device 1 will also send a downlink signal for an uplink HARQ process of mobile terminal 2, it is judged that the down signal sent in the sub-frame for the corresponding uplink HARQ process will interfere with the high-priority communication, and otherwise, the judging result is the opposite.

In practical applications, a relay device 1 may serve multiple mobile terminals, and each mobile terminal may have one or more uplink HARQ processes. For example, mobile terminal 2 also have an uplink HARQ process 2 which occupies sub-frames 3, 7, 11, 15.... Relay device 1 should consider, for all these uplink HARQ processes, whether it will interfere with high-priority communication.

As shown in Fig.4a, in sub-frames 0-7, uplink HARQ processes of each mobile terminal may all be performed without any constraints. Wherein, in sub-frame 4, mobile terminal 2 sends uplink data on PUSCH for uplink process HARQ process. Till sub-frame 8, this sub-frame is reserved for sending downlink signal (PDCCH+PDSCH) of high-priority communication, while relay device 1 should send back ACK or NACK to mobile terminal in 4 ms after sub-frame 4 according to the requirements of synchronous HARQ technique. According to an embodiment of the present invention, in order to avoid the interference caused by ACK or NACK to the signal reception on PDCCH and PDSCH, in step S11, the relay device should not send ACK or NACK in this sub-frame.

As an example of the HARQ technique, if data sender does not receive ACK or NACK from data receiver in a predefined time, the data sender determines that the data receiver does not receive the data correctly and then performs retransmission. There is an interval of 4 ms (4 sub-frames) between the sub-frame in which mobile terminal 2 should perform retransmission, namely sub-frame 12, and the sub-frame in which relay device 1 should send ACK or NACK.

According to this embodiment, in step S12, it is judged by relay device 1 according to the resource allocation information whether the retransmission data on PUSCH sent by mobile terminal 2 on sub-frame 12 for uplink HARQ process 1 will interfere with the high-priority communication. Apparently, the judging result is positive. Then, relay device 1 indicates to mobile terminal 2 that the retransmission data on PUSCH to be sent by mobile terminal 2 on sub-frame 12 will interfere with the high-priority communication. According to the indication, mobile terminal 2 suspends sending uplink signal in uplink HARQ process 1 in step S21. Wherein, the indication can be loaded in PDCCH.

Those skilled in the art understand there is no strict order between steps S10, S11 and steps S12, S13. That is, relay device 1 can firstly execute step S11 and then execute step S12, and it can also firstly execute step S13 and then execute step S10. Wherein, since sub-frame 8 is ahead of sub-frame 12, all steps related to sub-frame 8 can have priority of executing.

In order to overcome interference caused by sending uplink signal for uplink HARQ process 1 to the high-priority communication, mobile station 2 should judge whether such interference will occur. One judging way is to rely on an indication of relay device 1, as shown in Fig.3. Once relay device 1 performs the indication in step S13, mobile terminal 2 determines that sending uplink signal will cause interference to high-priority communication, and then enters into step S21 to suspend it. Another judging way is similar to step S12 at relay device 1, wherein mobile terminal 2 judges, directly according to the resource allocation information, whether the retransmission data to be sent in sub-frame 12 will interfere with high-priority communication, and executes the subsequent steps according the judging result.

Preferably, after suspending sending uplink signal in uplink HARQ process 1, mobile terminal 2 will buffer the suspended data, and wait for opportunity to send the data to relay device 1.

It is easy to understand that if sending uplink signal of uplink HARQ process 1 will not interfere with high-priority communication of relay device 1, mobile terminal 2 will not suspend sending the uplink signal therein; likewise, if sending downlink signal of uplink HARQ process 1 will not interfere with the high-priority communication, mobile terminal 2 will not suspend sending the downlink signal therein.

According to a specific embodiment of the present invention, the high-priority between base station 0 and relay device 1 is a uni-directional communication, which is similar to TV signal normally watched or Radio signal normally listened to. Wherein, relay device 1 will not provide feedback about signal reception status to base station 0. In this case, the high-priority communication will not relate to sending uplink signal, and therefore, sending uplink signal in uplink HARQ process 1 will not interfere with the high-priority communication. Thus, steps S12 and S13 at relay device 1 as well as step S21 at mobile terminal 2 is omittable.

As shown in Fig.4a, after the uplink and downlink signals are suspended to be sent, the present invention further provides a mechanism for resuming. In details:
In step S14, relay device 1 judges whether the high-priority communication ends. For example, as shown in Fig.4a, if relay device 1 sends an ACK to base station 0 in sub-frame 12 and base station 0 does not have subsequent new downlink data to be sent for the moment, base station 0 provides relay device with an indication, which represents that the present high-priority communication has ended. Thus, relay device 1 obtains the judging result in step S14. As shown in Fig.4a, at a certain time point before sub-frame 16, base station 0 indicates to relay device 1 that the present high-priority communication has ended, and accordingly, in sub-frame 16, relay device 1 instructs mobile terminal 2 to resume sending uplink signal in uplink HARQ process 1, namely executing step S16 in Fig.3. According to such instruction, in step S21, mobile terminal 2 resumes sending uplink signal in uplink HARQ process, namely sending the buffered retransmission data which should have been sent in sub-frame 12 to the relay device in sub-frame 20. Wherein, if mobile terminal 2 does not buffer the data which should have been retransmitted in sub-frame 12, mobile terminal 2 will starts a new initial transmission in sub-frame 20.

According to a variation of the embodiment, relay device 1 uses the downlink signal resumed to be sent for uplink HARQ process 1 in step S13 to instruct mobile terminal 2 to resume sending uplink signal for uplink HARQ process 1. That is, in sub-frame 16, relay device 1 sends mobile station 2 the NACK which should have been sent in sub-frame 8, or directly sends PDCCH to instruct the user to restart the transmission. After receiving NACK or PDCCH, mobile terminal retransmits the buffered uplink data to relay device 1.

Considering that the reason that in sub-frame 8, relay device 1 does not provide mobile terminal 2 with feedback about the receiving status in sub-frame 4 is to avoid causing interference to high-priority communication instead of not correctly receiving the data. Thus, relay device 1 may have correctly received the uplink data in sub-frame 4, and it is not advantageous to increasing system efficiency if a retransmission is performed. Consequently, in sub-frame 16, if relay device 1 correctly receives the uplink data in sub-frame 4, it sends ACK or PDCCH to mobile terminal 2 so as to trigger mobile terminal 2 to start a new initial transmission.

Of course, if the buffered retransmission data or the initial transmission data recently generated is expired due to the long-time suspending, the mobile terminal will discard the expired data and the mobile terminal 2 will send relay device 1 the uplink data that is recently generated but not yet expired in sub-frame 20.

According to another embodiment of the present invention, still referring to Fig.4a, wherein, according to the indication of the resource allocation information, sub-frames 8 and 12 are reserved for a high-priority communication between relay device 1 and base station 0, and base station 0 should have sent downlink signal on PDCCH and PDSCH to relay device 1 in sub-frame 8. However, due to certain reason, this high priority communication is forced to be cancelled, and accordingly, at a certain time point before sub-frame 8, base station 0 indicates to relay device 1 that this high-priority communication is cancelled. At this time, relay device 1 has preferably suspended ACK/NACK which should have been sent in uplink HARQ process 1, and can therefore obtain the information about the canceling of the high-priority communication without interference and forward it to mobile terminal 2 by sending ACK information or PDCCH such that mobile terminal 2 does not need to suspend sending uplink signal in the uplink HARQ process 1 or at least resumes sending as early as possible.

In the example shown in Fig.4b, sub-frames 8, 12 and 16 are reserved for downlink PDCCH, uplink PUSCH and downlink ACK or NACK in high-priority communication. Therefore, as shown in the figure, relay device 1 and mobile terminal 2 suspend sending corresponding signals in these 3 sub-frames. Till sub-frame 20, although the high-priority communication has ended, mobile terminal 2 still suspend sending uplink signal because it has not receive resuming indication information yet. Relay device 1 can send resuming indication information to mobile terminal 2 in sub-frame 24 (not shown for brevity) such that mobile terminal will resume sending uplink signal in the uplink HARQ process in sub-frame 28. Same as the embodiment described in combination with Fig.4a, the resuming indication information can be ACK or NACK or PDCCH information which the relay device resumes sending.

Of course, according to an embodiment of the present invention, mobile terminal 2 can start time counting since sending uplink signal for an uplink HARQ process is suspended, and resume sending uplink signal for this uplink HARQ processing by itself in a predefined duration of time.

According to yet another embodiment of the present invention, the high-priority communication between base station 0 and relay device 1 is not regular as those shown in Figs.4a, 4b, wherein there is, for example, an interval of 4 ms between sending an uplink signal and sending an adjacent downlink signal. Thus, even if sending downlink or uplink signal of the high-priority communication in a sub-frame is in collision with uplink HARQ process 1, the possibility that the collision continuously occurs in the subsequent sub-frames is much lower that the cases shown in Figs.4a, 4b. Thus, in these particular embodiments, preferably, uplink HARQ process 1 is only constrained in a sub-frame (e.g. sub-frame 8) in which it is judged that interference will be caused, and is resumed in the next sub-frame occupied by the uplink HARQ process. For example, referring to Fig.4b, assuming that there is no above-mentioned collisions in sub-frames 12, 16, after downlink ACK/NACK is impacted and not sent in sub-frame 8, uplink HARQ process 1 resumes by itself in sub-frame 12. Particularly, mobile station 2 retransmits the uplink data that is initially transmitted in sub-frame 4, etc.

Optionally, relay device 1 can perform the judging in steps S10 and/or S12 for each sub-frame so as to avoid any missing.

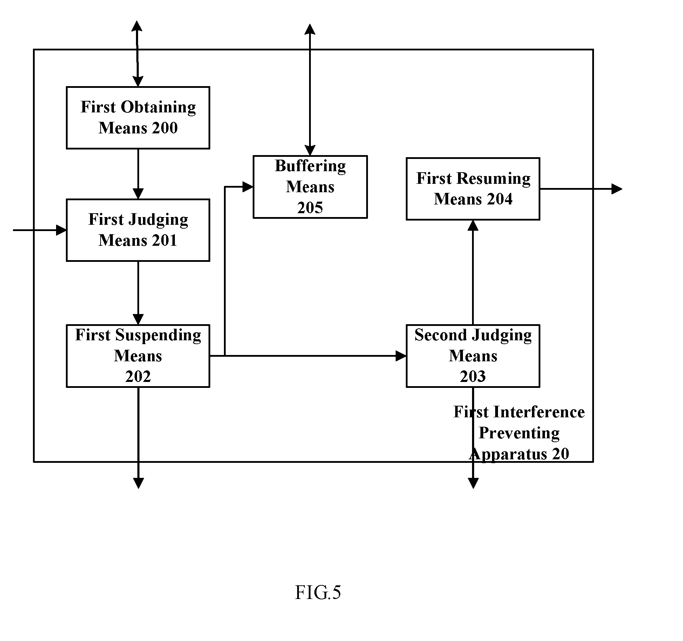

Fig.5 shows a block diagram of a first interference preventing apparatus for preventing signal interference in a first device of a wireless relay network based on synchronous HARQ according to a detailed embodiment of the present invention. Since the method of preventing interference provided by the present invention has been introduced in detail in the above, the introduction to apparatuses will be relatively brief. Wherein, mobile terminal 2 shown in Fig.1 is taken as a non-limiting embodiment of the first device.

The first interference preventing apparatus 20 comprises: a first obtaining means 200 for obtaining resource allocation information, which indicates radio resources allocated to mobile terminal 2 and relay device 1 to which it belongs; and a first judging means 201 for judging whether an uplink signal to be sent by mobile terminal 2 in a sub-frame for an uplink HARQ process of it will interfere with a high-priority communication of said relay device; a first suspending means 202 for making mobile terminal 2 suspend sending uplink signal in said sub-frame for said uplink HARQ process, if the uplink signal to be sent by mobile terminal 2 in said sub-frame for said uplink HARQ process will interfere with said high-priority communication of said relay device 1.

Preferably, said first suspending means 202 is further for: making mobile terminal 2 suspend sending uplink signal for said uplink HARQ process, if the uplink signal to be sent by mobile terminal 2 in said sub-frame for said uplink HARQ process will interfere with said high-priority communication of said relay device 1.

Preferably, said first judging means is for: judging that the uplink signal to be sent by said first device in said sub-frame for said uplink HARQ process will interfere with said high-priority communication, when any one of the following is satisfied:
- said relay device indicates to mobile terminal 2 that the uplink signal to be sent by mobile terminal 2 in said sub-frame for said uplink HARQ process will interfere with said high-priority communication;
- mobile terminal 2 judges, according to said resource allocation information, that the uplink signal to be sent by it in said sub-frame for said uplink HARQ process will interfere with said high-priority communication.

Preferably, said first interference preventing apparatus 20 further comprises a second judging means 203 for judging, after said first suspending means 202 makes mobile terminal 2 suspend sending uplink signal for said uplink HARQ process, whether a predefined condition is satisfied; and a first resuming means 204 for making mobile terminal 2 resume sending uplink signal for said uplink HARQ process when said predefined condition is satisfied.

Preferably, said first interference preventing apparatus 20 further comprises a buffering means 205 for buffering, after first suspending means 202 makes mobile terminal 2 suspend sending uplink signal for said uplink HARQ process, buffering the suspended uplink signal; and first resuming means 204 is further for: making mobile terminal 2 send the uplink signal that is buffered by buffering means 205 for said uplink HARQ process when said predefined condition is satisfied.

Preferably, said second judging means 203 is further for judging said predefined condition is satisfied when any one of the following is satisfied:
- mobile terminal 2 receives resuming indication information, said resuming indication information is used to instruct mobile terminal 2 to resume sending uplink signal for said uplink HARQ process;
- a predefined duration of time has passed since it is suspended to send uplink signal for said uplink HARQ process.

Preferably, said wireless relay network is based on 3GPP Long Term Evolution or a further evolution of 3GPP Long Term Evolution.

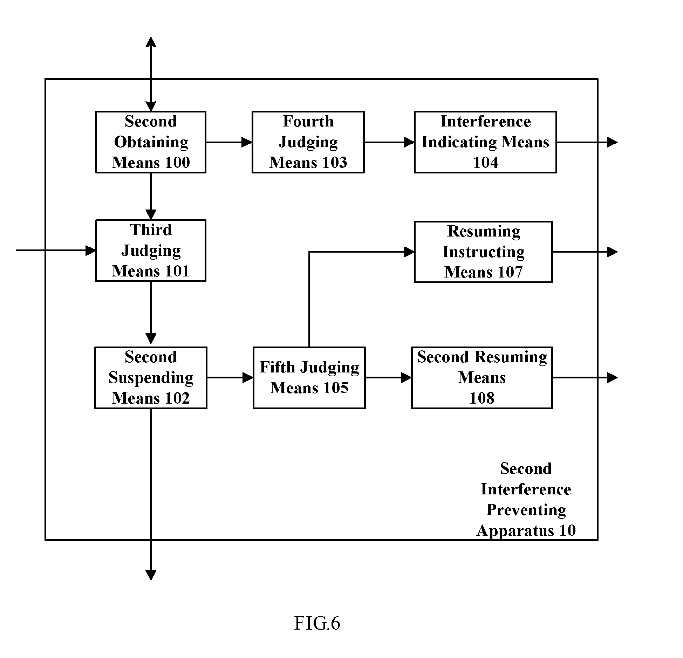

Fig.6 is a block diagram of a second interference preventing apparatus for preventing signal interference in a relay device of a wireless relay network based on synchronous HARQ according to a detailed embodiment of the present invention. Relay device 1 shown in Fig.1 is taken as an example.

The shown second interference preventing apparatus 10 comprises: a second obtaining means 100 for obtaining resource allocation information, which indicates radio resources, in particular sub-frames, allocated to relay device 1 and mobile terminal 2 served by relay device 1; and a third judging means 101 for judging, according to said resource allocation information, whether a downlink signal to be sent by relay device 1 in a sub-frame for an uplink HARQ process of mobile terminal 2 will interfere with a high-priority communication of relay device 1; a second suspending means 102 for, if the downlink signal to be sent by relay device 1 in said sub-frame for an uplink HARQ process of mobile terminal 2 will interfere with a high-priority communication of said relay device, making relay device 1 suspend sending downlink signal for said uplink HARQ process in said sub-frame.

Preferably, the second suspending means 102 is further for: if the downlink signal to be sent by relay device 1 in said sub-frame for an uplink HARQ process of mobile terminal 2 will interfere with a high-priority communication of relay device 1, making relay device 1 suspend sending downlink signal for said uplink HARQ process.

Preferably, the second interference preventing apparatus 10 further comprises a fourth judging means 103 for judging whether an uplink signal to be sent by mobile terminal 2 in a sub-frame for an uplink HARQ process of mobile terminal 2 will interfere with a high-priority communication of relay device 1; and an interference indicating means 104 for indicating to mobile terminal 2 that the uplink signal to be sent by mobile terminal 2 in said sub-frame for said uplink HARQ process will interfere with said high-priority communication, if the uplink signal to be sent by mobile terminal 2 in said sub-frame for said uplink HARQ process will interfere with said high-priority communication of relay device 1.

Preferably, the second interference preventing apparatus 10 further comprises a fifth judging means 105 for judging, after the second suspending means 102 makes relay device 1 suspend sending downlink signal for said uplink HARQ process, whether said high-priority communication ends; and a second resuming means 108 for making relay device 1 resume sending downlink signal for the uplink HARQ process, if the judging result of the fifth judging means 105 is that the high-priority communication has ended.

Preferably, the second interference preventing apparatus 10 further comprises a resuming instructing means 107 for instructing mobile terminal 2 to resume sending uplink signal for the uplink HARQ process if the judging result of said fifth judging means 105 is that the high-priority communication has ended.

Optionally, the downlink signal which relay device 1 resumes sending for the uplink HARQ process is also used to instruct mobile terminal 2 to resume sending uplink signal for the uplink HARQ process

Preferably, the wireless relay network is based on 3GPP Long Term Evolution or a further evolution of 3GPP Long Term Evolution.

The detailed embodiments of the present invention have been described in the above. It needs to be understood that, the present invention is not limited to the above specific embodiments, and any variation or modification can be made by those skilled in the art without departing from the scope of the appended claims.

## Claims

1. A method of preventing signal interference in a first device of a wireless relay network based on synchronous HARQ, comprising the following steps:
x. obtaining resource allocation information, which indicates radio resources allocated to said first device and a relay device to which it belongs; and
a. judging whether an uplink signal to be sent by said first device in a sub-frame for an uplink HARQ process of said first device will interfere with a high-priority communication of said relay device;
b. suspending sending uplink signal for said uplink HARQ process in said sub-frame, if the uplink signal to be sent by said first device in said sub-frame for said uplink HARQ process will interfere with said high-priority communication of said relay device.

2. A method according to claim 1, wherein said step b comprises:
- suspending sending uplink signal for said uplink HARQ process, if the uplink signal to be sent by said first device in said sub-frame for said uplink HARQ process will interfere with said high-priority communication of said relay device.

3. A method according to claim 1, wherein said step a comprises:
judging that the uplink signal to be sent by said first device in said sub-frame for said uplink HARQ process will interfere with said high-priority communication, when any one of the following is satisfied:
- said relay device indicates to said relay device that the uplink signal to be sent by said first device in said sub-frame for said uplink HARQ process will interfere with said high-priority communication;
- said first device judges, according to said resource allocation information, that the uplink signal to be sent by it in said sub-frame for said uplink HARQ process will interfere with said high-priority communication.

4. A method according to claim 2, further comprising the following steps after said step b:
c. judging whether a predefined condition is satisfied;
d. resuming sending uplink signal for said uplink HARQ process, when said predefined condition is satisfied.

5. A method according to claim 4, further comprising the following step after said step b and before said step d:
- buffering the suspended uplink signal;
said step d further comprises:
- sending the suspended uplink signal that is buffered.

6. A method according to claim 4, wherein said step c comprises:
judging said predefined condition is satisfied, when any one of the following is satisfied:
- resuming indication information is received, said resuming indication information is used to instruct said first device to resume sending uplink signal for said uplink HARQ process;
- a predefined duration of time has passed since it is suspended to send uplink signal for said uplink HARQ process.

7. A method according to any one of claims 1 to 6, wherein said wireless relay network is based on 3GPP Long Term Evolution or a further evolution of 3GPP Long Term Evolution.

8. A method of preventing signal interference in a relay device of a wireless relay network based on synchronous HARQ, comprising the following steps:
o. obtaining resource allocation information, which indicates radio resources allocated to said relay device and a first device served by said relay device; and
i. judging, according to said resource allocation information, whether a downlink signal to be sent by said relay device in a sub-frame for an uplink HARQ process of said first device will interfere with a high-priority communication of said relay device;
ii. suspending sending downlink signal for said uplink HARQ process in said sub-frame, if the downlink signal to be sent by said relay device in said sub-frame for said uplink HARQ process of said first device will interfere with said high-priority communication of said relay device.

9. A method according to claim 8, wherein said step ii comprises:
- suspending sending downlink signal for said uplink HARQ process, if the downlink signal to be sent by said relay device in said sub-frame for said uplink HARQ process of said first device will interfere with said high-priority communication of said relay device.

10. A method according to claim 8, further comprising the following steps:
- judging whether an uplink signal to be sent by said first device in a sub-frame for an uplink HARQ process of said first device will interfere with a high-priority communication of said relay device;
- indicating to said first device that the uplink signal to be sent by it in said sub-frame for said uplink HARQ process will interfere with said high-priority communication, if the uplink signal to be sent by said first device in said sub-frame for said uplink HARQ process will interfere with said high-priority communication of said relay device.

11. A method according to claim 9, further comprising the following steps after said step ii:
iii. judging whether said high-priority communication has ended;
iv. resuming sending downlink signal for said uplink HARQ process, if said high-priority communication has ended.

12. A method according to claim 11, further comprising the following step after said step iii:
- instructing said first device to resume sending uplink signal for said uplink HARQ process.

13. A method according to claim 12, wherein downlink signal which said relay device resumes sending for said uplink HARQ process is also used to instruct said first device to resume sending uplink signal for said uplink HARQ process.

14. A method according to any one of claims 8 to 13, wherein said wireless relay network is based on 3GPP Long Term Evolution or a further evolution of 3GPP Long Term Evolution.

15. A first interference preventing apparatus for preventing signal interference in a first device of a wireless relay network based on synchronous HARQ, comprising:
a first obtaining means for obtaining resource allocation information, which indicates radio resources allocated to said first device and a relay device to which it belongs; and
a first judging means for judging whether an uplink signal to be sent by said first device in a sub-frame for an uplink HARQ process of said first device will interfere with a high-priority communication of said relay device;
a first suspending means for making said first device suspend sending uplink signal in said sub-frame for said uplink HARQ process, if the uplink signal to be sent by said first device in said sub-frame for said uplink HARQ process will interfere with said high-priority communication of said relay device.

16. A first interference preventing apparatus according to claim 15, wherein said first suspending means is further for:
- making said first device suspend sending uplink signal for said uplink HARQ process, if the uplink signal to be sent by said first device in said sub-frame for said uplink HARQ process will interfere with said high-priority communication of said relay device.

17. A first interference preventing apparatus according to claim 1, wherein said first judging means is for:
judging that the uplink signal to be sent by said first device in said sub-frame for said uplink HARQ process will interfere with said high-priority communication, when any one of the following is satisfied:
- said relay device indicates to said first device that the uplink signal to be sent by said first device in said sub-frame for said uplink HARQ process will interfere with said high-priority communication;
- said first device judges, according to said resource allocation information, that the uplink signal to be sent by it in said sub-frame for said uplink HARQ process will interfere with said high-priority communication.

18. A first interference preventing apparatus according to claim 16, further comprising:
a second judging means for judging, after said first suspending means makes said first device suspend sending uplink signal for said uplink HARQ process, whether a predefined condition is satisfied;
a first resuming means for making said first device resume sending uplink signal for said uplink HARQ process, when said predefined condition is satisfied.

19. A first interference preventing apparatus according to claim 18, further comprising:
- a buffering means for buffering, after said first suspending means makes said first device suspend sending uplink signal for said uplink HARQ process, buffering the suspended uplink signal for said uplink HARQ process;
said first resuming means is further for:
- making said first device send the uplink signal that is buffered by said buffering means for said uplink HARQ process.

20. A first interference preventing apparatus according to claim 18, wherein said second judging means is for:
judging said predefined condition is satisfied, when any one of the following is satisfied:
- said first device receives resuming indication information, said resuming indication information is used to instruct said first device to resume sending uplink signal for said uplink HARQ process;
- a predefined duration of time has passed since it is suspended to send uplink signal for said uplink HARQ process.

21. A first interference preventing apparatus according to any one of claims 15 to 20, wherein said wireless relay network is based on 3GPP Long Term Evolution or a further evolution of 3GPP Long Term Evolution.

22. A second interference preventing apparatus for preventing signal interference in a relay device of a wireless relay network based on synchronous HARQ, comprising:
a second obtaining means for obtaining resource allocation information, which indicates radio resources allocated to said relay device and a first device served by said relay device; and
a third judging means for judging, according to resource allocation information, whether an downlink signal to be sent by said relay device in a sub-frame for an uplink HARQ process of said first device will interfere with a high-priority communication of said relay device;
a second suspending means for, if the downlink signal to be sent by said relay device in said sub-frame for an uplink HARQ process of said first device will interfere with a high-priority communication of said relay device, making said relay device suspend sending downlink signal for said uplink HARQ process in said sub-frame,.

23. A second interference preventing apparatus according to claim 22, wherein said second suspending means is further for:
- if the downlink signal to be sent by said relay device in said sub-frame for an uplink HARQ process of said first device will interfere with a high-priority communication of said relay device, making said relay device suspend sending downlink signal for said uplink HARQ process.

24. A second interference preventing apparatus according to claim 22, further comprising:
- a fourth judging means for judging whether an uplink signal to be sent by said first device in a sub-frame for an uplink HARQ process of said first device will interfere with a high-priority communication of said relay device;
- an interference indicating means for indicating to said first device that the uplink signal to be sent by said first device in said sub-frame for said uplink HARQ process will interfere with said high-priority communication, if the uplink signal to be sent by said first device in said sub-frame for said uplink HARQ process will interfere with said high-priority communication of said relay device.

25. A second interference preventing apparatus according to claim 23, further comprising:
a fifth judging means for judging, after said second suspending means makes said relay device suspend sending downlink signal for said uplink HARQ process, whether said high-priority communication ends;
a second resuming means for making said relay device resume sending downlink signal for said uplink HARQ process, if the judging result of said fifth judging means is that said high-priority communication has ended.

26. A second interference preventing apparatus according to claim 25, further comprising:
- a resuming instructing means for instructing said first device to resume sending uplink signal for said uplink HARQ process if the judging result of said fifth judging means is that said high-priority communication has ended.

27. A second interference preventing apparatus according to claim 26, wherein a downlink signal which said relay device resumes sending for said uplink HARQ process is also used to instruct said first device to resume sending uplink signal for said uplink HARQ process.

28. A second interference preventing apparatus according to any one of claims 22 to 27, wherein said wireless relay network is based on 3GPP Long Term Evolution or a further evolution of 3GPP Long Term Evolution.

29. A first device in a wireless relay network based on synchronous HARQ, comprising a first interference preventing apparatus according to any one of claims 15-21.

30. A relay device in a wireless relay network based on synchronous HARQ, comprising a second interference preventing apparatus according to any one of claims 22-28.
